# EUROPÄISCHE PATENTSCHRIFT

(11) **EP 0 384 037 B1**
(45) Veröffentlichungstag und Bekanntmachung des Hinweises auf die Patenterteilung: **01.03.1995**
(21) Anmeldenummer: 89123884.2
(22) Anmeldetag: 23.12.1989
(51) Int. Cl.: B65D 5/14, B65D 3/12, B31B 17/00

(54) **Flüssigkeitspackung mit aseptischen Eigenschaften und Verfahren zur Herstellung derselben**
Liquid-container with aseptic properties, and process of manufacturing same
Emballage pour liquides pourvu de propriétés aseptiques et procédé de fabrication

(30) Priorität: 22.02.1989 CH 629/89
(43) Veröffentlichungstag der Anmeldung: 29.08.1990
(73) Patentinhaber: Tetra Laval Holdings & Finance SA, 1009 Pully (CH)
(72) Erfinder: Andersson, Pär, CH-1095 Lutry (CH); Ruetschi, Werner, CH-1690 Villaz-St-Pierre (CH)
(74) Vertreter: Weber, Dieter, Dr.

(56) Entgegenhaltungen:
- EP-A- 0 181 750
- EP-A- 0 223 094
- WO-A-87/03536
- DE-A- 1 958 408
- FR-A- 2 502 119

## Beschreibung

Die Erfindung betrifft eine Verpackung für Flüssigkeiten, wie Milch, Saft oder dergleichen, mit über eine Längssiegelnaht zu einem Tubus verbundenen Seitenwänden, einem im wesentlichen ebenen Boden und einem eine Ausgießöffnung aufweisenden Deckel, wobei mindestens der Tubus aus mit Kunststoff beschichtetem Papier, Karton oder dergleichen als Trägermaterial besteht und der Boden längs mindestens einer Teilkante mittels eines im Querschnitt mindestens im wesentlichen L-förmigen Kunststoffrandes als Verbindungsstück am Tubus so angebracht ist, daß seine ebene Hauptfläche im Abstand von der Außenschnittkante (äußere Stirnkante) des Tubus angeordnet ist, wobei die Hauptfläche des Bodens aus mit Kunststoff beschichtetem Papier besteht.

Außerdem betrifft die Erfindung ein Verfahren zur Herstellung einer solchen Packung für Flüssigkeiten, wie Milch, Saft oder dergleichen, mit über eine Längssiegelnaht zu einem Tubus verbundenen Seitenwänden, an deren einem oberen Ende eine Deckel mit Ausgießöffnung wenigstens teilweise durch Anspritzen und am gegenüberliegenden unteren Ende ein Boden zur Bildung eines Scharniers längs einer Außenteilkante angebracht werden, dann die Packung am geöffneten Boden vorbei gefüllt und danach der Boden zum Verschließen des Tubus heruntergefaltet und längs dem restlichen Teil der Außenkante verschweißt wird.

Für Fließmittel allgemein und insbesondere für Flüssigkeiten gibt es zahlreiche Arten von Einwegpackungen, wobei hier insbesondere diejenigen Packungen interessieren, die über eine Längssiegelnaht zum Tubus verbundene Seitenwände aus mit Kunststoff beschichtetem Trägermaterial haben. Als solches dient in dem hier interessierenden Falle Papier, Karton oder dergleichen, wobei der eine Begriff stellvertretend für den anderen verstanden werden soll. Es ist selbstverständlich, daß eine Flüssigkeitspackung einen Deckel mit Ausgießeinrichtung und einen Boden hat. Hier besteht allgemein das Bedürfnis, die Packung flüssigkeitsdicht und stabil zu gestalten und die Ausgießeinrichtung dennoch so vorzusehen, daß sie mit nicht allzu großem Kraftaufwand geöffnet werden kann.

Um diesen Bedingungen zu genügen, gibt es bereits eine in der DE-A-2 210 013 beschriebene Packung mit Seitenwänden aus Papier, bei welcher der Boden und Deckel eingespritzt sind. Mit einer Spritzmaschine läßt sich nämlich eine Ausführungsform für eine Ausgießeinrichtung gestalten, die einwandfrei dicht ist und sich dennoch gut öffnen läßt. Auch lassen sich Deckel und Boden bei der hier betrachteten, bekannten Ausführungsform aus Thermoplast ohne Trägermaterial gut an den stirnseitigen Endkanten der Seitenwände anspritzen, weil die Oberfläche der Seitenwände außen und innen mit einer dünnen Kuststoffschicht belegt sind.

Bei der Herstellung dieser bekannten Packung ist man so vorgegangen, daß zunächst die Seitenwände aus Papier gebildet und mittels der Längssiegelnaht zum Tubus geformt werden und danach der Deckel an einer Endkante des Tubus angespritzt wird. Um diese bekannte Packung füllen zu können, hat man vorgesehen, den Boden zunächst nur längs eines Teiles der Außenkante des Tubus anzuschweißen, so daß sich hierdurch der Boden wie über ein Scharnier gegenüber dem Tubus bewegen läßt, insbesondere der Boden offen ist und die Packung somit gefüllt werden kann. Nach dem Füllen wird der Boden quer zur Längsachse des Tubus in dessen Querschnitt hineingefaltet und längs der restlichen Bereiche am Endrand des Tubus innen angeschweißt. Die auf diese Weise gefertigte Packung ist flüssigkeitsdicht, kann umverpackt, transportiert, auf Lager genommen werden usw.

Thermoplastischer Kunststoff wie Materialien allgemein stehen nicht in beliebiger Menge und kostenfrei zu Verfügung, so daß der Packungshersteller selbstverständlich bemüht ist, dünne Kunststoffwandungen auszubilden. Diese sind ebenso wie nur mit Kunststoff beschichtetes Papier für Sauerstoff sehr gut durchlässig. Damit würde eine solche Flüssigkeitspackung nicht für aseptische Zwecke taugen.

Andererseits ist aber aus der DE-A-1 958 408 eine Packung bekannt, die zur Verbesserung der Barriereeigenschaften der Packungswandungen mit einer metallenen Zwischenlage versehen ist.

Der dort beschriebene Becher ist flüssigkeitsdicht und weist eine Becherwandung auf, die aus einer mit Papier kaschierten Aluminiumfolie hergestellt ist. An der Papierfläche ist die Becherwandung mit PVC beschichtet. Ein Bodenteil, das ähnlich wie der Becher aufgebaut ist, ist mit der Becherwandung durch Einrollen verbunden. Danach wird ein vorgeformter PVC-Boden mit dem eingerollten Rand verschweißt. Dieser vorgeformte PVC-Boden ist ein selbsttragender Kunststofformling. Mit Nachteil ist die Herstellung dieser Packung aufwendig und erfordert eine zu große Menge Kunststoff.

Mit ähnlichen und weiteren Nachteilen behaftet ist eine Packung, die aus der EP-A-0 181 750 bekannt geworden ist. Diese Packung weist einen Boden aus mit Kunststoff beschichtetem Papier auf, der mittels Druck und Hitze über ein ringförmiges Abdeck- und Verstärkungsteil mit dem Ende des Tubus verbunden ist. Das ringförmige Abdeck- und Verstärkungsteil stellt zwar auch ein Verbindungsstück zwischen der Endwandung der Packung und deren Tubus dar, es benötigt aber für seine massive und stabile Ausgestaltung nicht unerhebliche Mengen an Kunststoff.

Abgesehen davon, daß bei der bekannten Packung die Hauptfläche des Bodens nicht im Abstand von der Außenschnittkante des Tubus nach innen eingezogen ist, weist der Boden auch keine Verbindungslaschen auf. Diese benötigt er bei dem Herstellungsverfahren auch nicht, bei welchem zuerst der vorgefertigte, in Querschnitt U-förmige Kunststoffrand allein ohne Bodenwandungen über das Ende des Tubus aufgesteckt und mit diesem verbunden wird. Ersr danach erfolgen die Auflage und Verbindung der Bodenwandung mit diesem U-förmigen Verstärkungsring.

Aufgabe der Erfindung ist es daher, eine Flüssigkeitspackung der eingangs genannten Art für aseptischen Gebrauch auszugestalten und eine wirtschaftliche Herstellung zu ermöglichen.

Hinsichtlich der Flüssigkeitspackung selbst wird diese Aufgabe erfindungsgemäß dadurch gelöst, daß der Boden einen Aufbau mit einer metallenen Zwischenlage hat und innerhalb der Außenschnittkante des Tubus angeordnet ist, daß an der Außenkante der Hauptfläche des Bodens über Faltlinien Verbindungslaschen angelenkt sind, die aus der Ebene der Hauptfläche neben der Randoberfläche des Bodens quer herausgefaltet und am Endrand des Tubus innen angeschweißt sind, und daß der mindestens im wesentlichen L-förmige Kunststoffrand an der Randoberfläche des Bodens und an der Außenschnittkante des Tubus sowie an der Außenschnittkante des Bodens angeschweißt ist. Es wird durch diese Maßnahmen ein Boden aus Papier mit Metallbeschichtung an Bodenende des Tubus in diesen ein Stück weit eingezogen angeordnet und flüssigkeitsdicht verschweißt. Hierfür wird erfindungsgemäß ein Kunststoffrand verwendet, der am hauptsächlich Papier aufweisenden Hauptfeld des Bodens angespritzt ist und im Querschnitt vorzugsweise zwei im wesentlichen L-förmig zueinander stehende Schenkel hat. Bei der erfindungsgemäßen Flüssigkeitspackung kann der Kunststoffrand nicht einstückig mit der Hauptfläche des Bodens ausgestaltet sein, weil der Boden aus Papier mit Metallbeschichtung besteht. Deshalb ist erfindungsgemäß am Boden der Kunststoffrand angeschweißt oder angespritzt.

Aus dem oben erwähnten Dokument DE-A-1.958.408 ist es zwar schon an sich bekannt, eine vom Tubus getrennte Hauptfläche eines Bodens aus mit Kunststoff beschichtetem Papier herzustellen und mit einer metallenen Zwischenlage zu versehen. Dort handelt es sich aber im Bodenbereich um eine Bördelungsverbindung zwischen Tubus und Boden, die erst dadurch Festigkeit gewinnt, daß ein vorgeformter PVC-Boden im Einrollbereich unten an den Becher angeschweißt wird. Hierdurch wird erheblich mehr Material benötigt, so daß der Fachmann Herstellung und Aufbau dieses bekannten Bechers nicht als Anregung für die Verbesserung der vorstehend genannten bekannten Packung heranzieht.

Weiterhin kann der Querschnitt des Tubus rund oder vieleckig sein, gegebenenfalls an einem Ende rund und am anderen Ende vieleckig mit der Folge, daß Boden und/oder Deckel in Draufsicht verschiedenste Gestalt haben können, rund, vieleckig, insbesondere kreisrund, dreieckig, viereckig, rechteckig, acht-, zehn-, zwölfeckig oder auch trapezförmig. Aus den folgenden Beschreibungen geht hervor, daß der Boden erfindungsgemäß separat hergestellt wird, und schon deshalb kann die Metallbeschichtung besonders einfach für die Herstellung des Bodens eingesetzt werden, so daß die Packung nicht nur wirtschaftlich interessant sondern auch zuverlässig und vor allem für die Abfüllung steriler Füllgüter verwendbar ist.

Zweckmäßig ist es, wenn der Deckel wenigstens teilweise ein Wandfeld aufweist, dessen Rand durch eingespritzte Brücken aus Kunststoff flüssigkeitsdicht an einer Nachbarwandung angebunden ist. Eine Packung mit einem Tubus aus Papier, die einen derart aufgebauten Deckel hat, ist zwar an sich schon bekannt. Eine Flüssigkeitspackung hat aber drei wesentliche Teile, nämlich den Tubus, den Deckel und den Boden, und wenn schon einer dieser drei wesentlichen Teile nach einem unterschiedlichen Konzept gefertigt wird, verändert sich die Gesamtproblematik der Flüssigkeitspackung vollständig. Tatsächlich ist man bisher immer davon ausgegangen, daß man zwar die genannten Brücken aus Kunststoff an die Ränder der Nachbarwand flüssigkeitsdicht anspritzen kann, daß man hierzu aber mindestens zweiteilige Formwerkzeuge braucht, d.h. Außenwerkzeuge und einen im Inneren des Tubus befindlichen Dorn, so daß die Herstellung des Deckels immer vor dem Befüllen der Packungen abgeschlossen sein muß. Ist aber eine Flüssigkeitspackung gefüllt und einseitig noch offen, dann sind die Maßnahmen zum Verschließen wiederum beschränkt durch das vorhandene Material einerseits und den Flüssigkeitsspiegel, einschließlich seiner Labilität und Beweglichkeit, andererseits. Aus diesem Grunde hat man den Klotzbodenverschluß als besonders zweckmäßig angesehen und die eingangs bereits nachteilige Faltung des Tubusmaterials in Kauf genommen. Erfindungsgemäß wird das Tubusmaterial hingegen nicht mehr gefaltet, sondern es wird der Boden aus mit Metall beschichtetem Papier eingesetzt und verschweißt.

Es ist günstig, wenn der am Endrand des Tubus angebrachte Teil des Kunststoffrandes zur zusätzlichen Überdeckung der Außenschnittkante des Tubus unter Bildung wenigstens eines L-förmigen Querschnittes mit einer Standfläche verlängert ist. Es handelt sich hier im Querschnitt des Kunststoffrandes gesehen um eine verlängerte Zunge, welche die Außenschnittkante des Tubus überdeckt und daher bei fertiger und gefüllter Packung später die Standfläche bildet. Auf diese Weise wird mit demselben Kunststoffrand, welcher den Boden mit dem Tubus verbindet, zugleich auch die kunststoffreie und damit gefährdete Außenschnittkante des Tubus geschützt.

Vorteilhaft ist es ferner, wenn der Kunststoffrand, die Außenschnittkante des Tubus beidseitig und Im Querschnitt U-förmig umgreifend, mit einem an der Standfläche angebrachten Außenschutzfeld versehen ist. Diese Ausführungsform ist noch weiter verbessert, d.h. der Kunststoffrand ist an der in Rede stehenden Stelle im Querschnitt mit einer noch längeren Zunge versehen als bei der vorstehend beschriebenen Ausführungsform der Fall war, so daß aus dieser längeren Zunge nicht nur eine Standfläche sondern zusätzlich auch noch ein Außenschutzfeld gebildet werden kann. Dieses Kunststoffeld schützt nämlich den Rand des Tubus außen und verhindert, daß die nur auf der Außenschnittkante des Tubus aufliegende Standfläche bei grober Behandlung abgeschält werden könnte.

Durch die Verbindungslaschen außen am Boden hat, im Querschnitt gesehen, der Boden die Gestalt eines U mit kurzen freien Schenkeln, wobei die Schenkel die Verbindungslaschen sind, die mit dem Endrand des Tubus innen verschweißt sind. Dadurch ist an sich schon eine flüsigkeitsdichte Packung gegeben, wobei lediglich die kunststoffreien Außenschnittkanten der Verbindungslaschen und des Tubus geschützt werden müssen. Diesen Schutz übernimmt bei dieser Ausführungsform der Kunststoffrand.

Es kann ferner zweckmäßig sein, wenn erfindungsgemäß der Kunststoffrand mit auf dem Boden außen angeschweißten Verstärkungsstegen verbunden ist. Diese können beispielsweise kreuzartig oder sternförmig auf der Oberfläche des Bodens währens des Spritzgießvorganges aufgesiegelt sein mit dem weiteren Vorteil, daß im Falle einer symmetrischen Ausbildung im Zentrum der Verstärkungsstege, vorzugsweise des Kreuzes oder Sternes, in der Herstellungsmaschine die Kunststoffzufuhr erfolgt. Der Fachmann weiß nämlich, daß bei zentraler Kunststoffzufuhr immer ein besonders gut ausgebildeter Randbereich geformt werden kann, denn die Fließwege des heißen, flüssigen Thermoplast sind in diesem Falle in alle Richtungen gleich lang. Die Gestalt der gesamten Flüssigkeitspackung ist besonders günstig, wenn erfindungsgemäß die ebene Hauptoberfläche des Bodens viereckig ist und vier längliche Verbindungslaschen aufweist. Eine andere alternative Ausführungsform ist dadurch gekennzeichnet, daß die ebene Hauptfläche des Bodens einen runden Umfang hat und eine Vielzahl kleiner, vorzugsweise dreieckförmiger, Verbindungslaschen aufweist.

Unbeachtlich der eigentlichen Ausgestaltung von Deckel oder Boden kann man die erfindungsgemäße Packung gut für den Transport oder die Lagerung von sterilen Flüssigkeiten verwenden, denn die Seitenwandung, der Deckel und der Boden können aus Materialien (Papier mit Metallbeschichtung) mit guten Barriereeigenschaften für Sauerstoff ausgebildet werden. Am Rand der Deckelwandfelder sind die Kunststoffbrücken ausreichend dick ausgestaltet, so daß eine verhältnismäßig gute Barrierreeigenschaft gegeben ist. Der Boden und sein Anschluß am Tubus ist vorstehend ausführlich beschrieben mit den entsprechenden guten Barierreeigenschaften für Sauerstoff.

Das eingangs erwähnte Verfahren zur Herstellung der Packung ist zur Lösung der Aufgabe dadurch gekennzeichnet, daß der Boden so vorgefertigt wird, daß eine die gesamte Querschnittsfläche des Tubus einnehmende Hauptfläche aus mit einer metallenen Zwischenlage versehenem und mit Kunststoff beschichtetem Papier oder dergleichen ausgeschnitten und längs ihrer Randoberfläche mit einem mindestens im wesentlichen L-förmigen Kunststoffrand verbunden wird, und daß dieser vorgefertigte Boden auf Lager genommen oder beim Erstellen des Kunststoffrandes an der Teilendkante des Tubus angeschweißt oder angespritzt wird, wobei zum Vorfertigen des Bodens die Hauptfläche mit angelenkten Verbindungslaschen ausgestanzt wird, die Laschen hochgefaltet werden und der Kunststoffrand mit wenigstens L-förmigem Querschnitt an die Ransoberfläche des Bodens und an die Verbindungslaschen angespritzt wird.

Anders als bei der bekannten, eingangs geschriebenen Packung, bei welcher Boden und Deckel aus Kunststoff ohne Trägermaterial bestehen, die in einem einzigen Spritzwerkzeug an den Tubus so angebracht werden, daß der Deckel geschlossen und der Boden noch offen ist, wird erfindungsgemäß mit zwei getrennten Spritzwerkzeugen gearbeitet. Das zweite, separate Spritzwerkzeug wird zur Herstellung des Bodens eingesetzt, der in der oben beschriebenen Weise zunächst in einer ersten Stufe vom Lager genommen (oder während der Anbringung des Kunststoffrandes) und längs nur einer Teilkante am Tubus angeschweißt wird. Zwar ist die Wirkung auch hier wie bei der bekannten Verpackung die, daß die Packung vom Boden her gefüllt werden kann. Der Boden hat aber einen anderen Aufbau und daher andere Materialien, so daß das bekannte Herstellungsverfahren nicht anwendbar ist. Der vorgefertigte Boden wird der Schweißmaschine zugeführt, oder wenigstens die Hauptfläche des Bodens ist vorgefertigt und wird mit dem Kunststoffrand in diesem zweiten separaten Spritzwerkzeug hergestellt und dabei an einer Außenteilkante, vorzugsweise einer Verbindungslasche des Tubus angeschweißt. Weil am inneren Endrand des Tubus wenigstens eine Verbindungslasche angeschweißt wird, besteht die Verbindungslasche also aus mit Kunststoff und/oder Metall beschichtetem Papier.

Der Boden mit den Verbindungslaschen wird zunächst vorgefertigt, auf Lager gehalten und dann an den Tubusrand angeschweißt oder wenigstens so vorbereitet, daß der Kunststoffrand schon teilweise an den Verbindungslaschen angespritzt ist und wenigstens eine Verbindungslasche beim Anspritzen an der Außenteilkante des Tubus angespritzt wird. Das Verfahren hat daher gemäß der Erfindung die Merkmale, daß zum Vorfertigen des Bodens die Hauptfläche mit angelenkten Verbindungslaschen ausgestanzt wird, die Laschen hochgefaltet werden und der Kunststoffrand mit wenigstens L-förmigem Querschnitt an die Randoberfläche des Bodens und an die Verbindungslaschen (mit einer überstehenden Zunge zur späteren Bildung von Standfläche und/oder Außenschutzfeld) angespritzt wird. Bei einem beispielsweise quadratischen Boden wird ein mit Metall beschichtetes quadratisches Papierfeld ausgeschnitten, wobei die Ecken weiter so ausgestanzt werden, daß sich zwischen den Ecken die Verbindungslaschen ergeben. Entsprechende Rillungen sorgen für Faltlinien, längs denen die Verbindungslaschen aus der Ebene der Hauptfläche quer herausgefaltet werden können. Beim Vorfertigen des Bodens wird also der Kunststoffrand dann an die Verbindungslaschen angespritzt, welcher diese damit in der hochgefalteten Position festlegt. Der z.B. auf Lager gegebene Boden zeigt dann einen Kunststoffrand mit nach außen in einer Ebene parallel zur Hauptfläche des Bodens herausstehender bzw. überstehender Zunge, welche später die Standfläche und/oder das Außenschutzfeld für die Packung bildet.

Erfindungsgemäß ist es dabei zweckmäßig, wenn zum Anbringen des vorzugsweise durch ein getrenntes Spritzwerkzeug vorgefertigten Bodens an einer Teilendkante des Tubus zunächst wenigstens eine Verbindungslasche am Endrand des Tubus innen durch Induktionsschweißung befestigt wird und danach die überstehende Zunge des Kunststoffrandes U-förmig um die Verbindungslasche des Bodens und den Endrand des Tubus umgelegt und von außen festgeschweißt wird. Dieses Festschweißen kann durch Ultrahochfrequenzschweißen oder Wärmebacken erfolgen, falls man die Wirkung der Metallschicht nicht verwenden will oder keine Metallschicht vorgesehen ist. Die Induktionsschweißung setzt natürlich die Metallbeschichtung voraus und wird vorzugsweise verwendet, wenn zunächst die Verbindungslasche am Endrand des Tubus zu befestigen ist, wobei es sich hier um eine weiter innenliegenden Verschweißung handelt. Wärmebacken könnten die notwendige Schweißwärme von außen nicht bis an diese innenliegende Stelle transportieren.

Weitere Vorteile, vorteilhafte Merkmale und Anwendungsmöglichkeiten der vorliegenden Erfindung ergeben sich aus der folgenden Beschreibung bevorzugter Ausführungsbeispiele in Verbindung mit den Zeichnungen. Es zeigen:
- Figur 1: perspektivisch eine erste Ausführungsform einer Packung gemäß der Erfindung mit quaderförmiger Gestalt,
- Figur 2: eine zweite Ausführungsform einer perspektivischen dargestellten Packung mit viereckigem Boden und rundem Deckel,
- Figur 3: ebenfalls eine perspektivische Darstellung einer dritten anderen Ausführungsform,
- Figur 4: eine herausgezeichnete, perspektivische und abgeschnittene Einzelheit aus Figur 3 in größerem Maßstab,
- Figur 5: eine Querschnittsansicht der Bodenkante während des Induktionsverschweißens bei noch Z-förmig angeordnetem Kunststoffrand,
- Figur 6: eine andere herausgegriffene, perspektivische und abgebrochene Einzelheit an der Deckelseite der Packung der Figur 3 in vergrößertem Maßstab,
- Figur 7: eine ähnliche Ansicht wie Figur 5, wobei jedoch die Werkzeuge entfernt sind und die Zunge des Kunststoffstreifens zur Bildung des Außenschutzfeldes herumgeklappt und versiegelt ist,
- Figur 8: die Draufsicht auf einen quadratischen Boden mit Verbindungslaschen, im Zuschnitt,
- Figur 9: den Zuschnitt eines runden Bodens mit dreieckförmigen Verbindungslaschen,
- Figur 10: perspektivisch den vorgefertigten Boden in Rechteckform mit dem im wesentlichen Z-förmigen Kunststoffrand,
- Figur 11: eine ähnliche Ansicht wie Figur 10, jedoch angebrochen und von einer anderen Ausführungsform ohne Verstärkungsstege,
- Figur 12: eine abgebrochene Querschnittsansicht entlang der Linie XII-XII der Figur 10, und
- Figur 13: eine abgebrochene Querschnittsansicht durch den bodenseitigen Endrand des Tubus mit angeschweißtem Kunststoffrand.

Die hier beschriebene Flüssigkeltspackung weist einen Tubus 1 mit einer Längssiegelnaht 4 auf, mit deren Hilfe die mit Kunststoff und Metall beschichtete Papierbahn unter Bildung der Seitenwände 5 zum Tubus 1 gebildet ist. Oben ist die Packung mit einem Deckel 2 und unten mit einem Boden 3 verschlossen. Der Deckel 2 ist mit einer allgemein mit 6 bezeichneten Ausgießöffnung versehen.

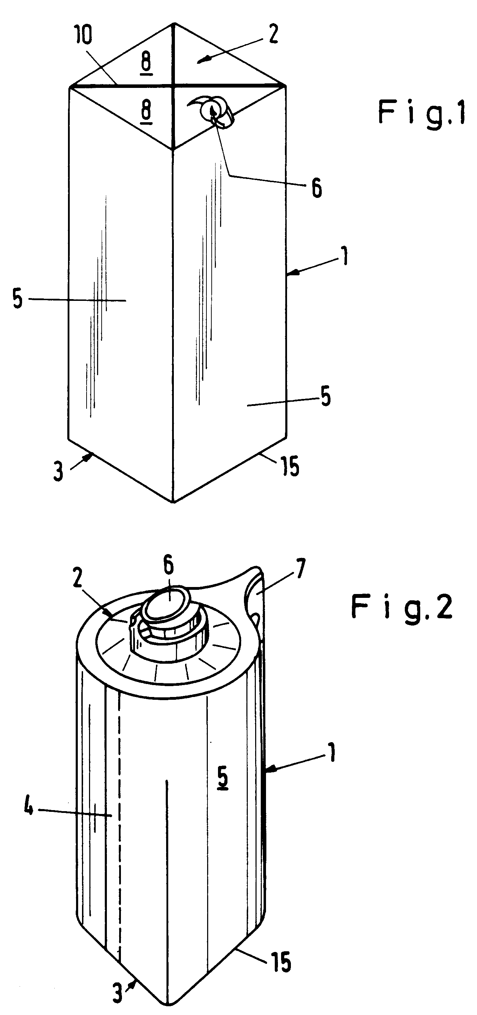

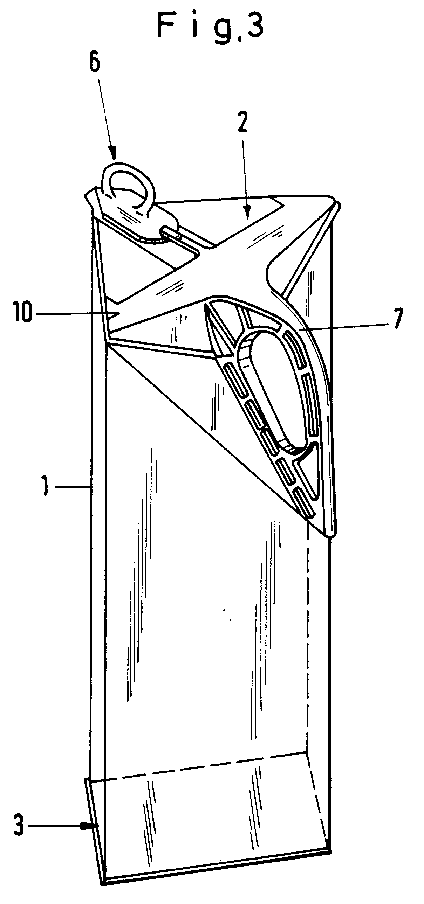

Die Ausführungsform nach Figur 1 hat einen in Draufsicht quadratischen Boden 3 sowie einen quadratischen Deckel, während bei der Ausführungsform der Firgur 2 der Boden zwar ebenfalls quadratisch, der Deckel 2 aber rund ausgebildet ist. Bei der Ausführungsform der Figur 3 hingegen ist der Deckel 2 trapezförmig bzw. dreieckig ausgebildet.

Während bei allen drei Ausführungsformen der Boden separat vorgefertigt und dann angeschweißt ist, wurde der Deckel 2 nach den Ausführungsformen der Figuren 2 und 3 aus thermoplastischem Material ohne Papeir oder Karton mitsamt dem Griff 7 angespritzt.

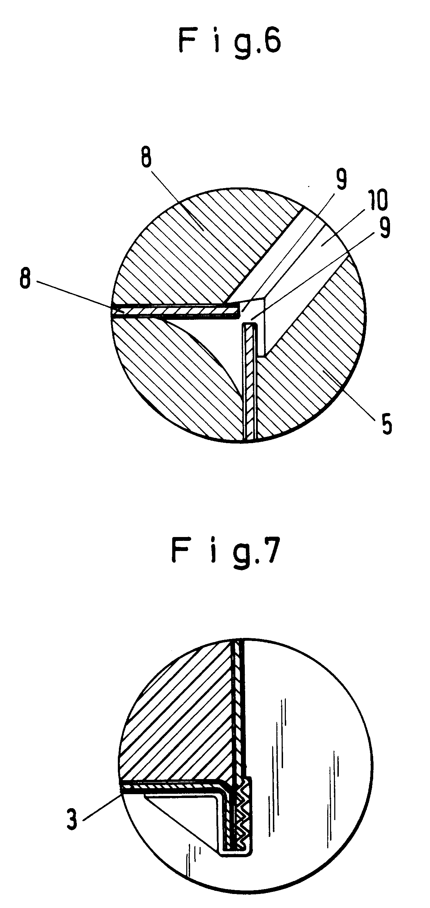

Bei der Ausführungsform nach Figur 1 ist der Deckel durch vier umgefaltete, mit dem Tubus 1 einstückig ausgebildete Wandfeder 8 gebildet. Die Ränder 9 dieser Wandfelder 8 - dies gilt auch für die Seitenwände 5 an den Eckbereichen (Figur 6) - sind durch eingespritzte Brücken 10 aus Kunststoff flüssigkeitsdicht miteinander verbunden.

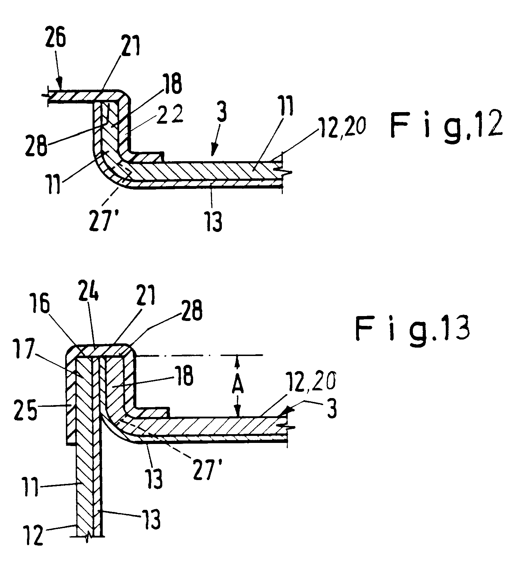

Das neue an der hier beschriebenen Packung aller Ausführungsformen ist der Aufbau des Packungsmaterials, der besonders deutlich aus den Figuren 12 und 13 hervorgeht. Für das Trägermaterial steht hier das Papier 11, welches man auch als Karton bezeichenen könnte. Es ist auf der einen, zumeist später an der Außenseite der Packung angeordneten Oberfläche mit Kunststoff 12 dünn beschichtet und auf der gegenüberliegenden, später meist dem Inneren der Packung zugewandten Seite mit einer in Kunststoff eingehüllten metallenen Zwischenlage 13 (meist eine Aluminiumfolie) dicker beschichtet. Dieser Meterialaufbau ist bereits an sich bekannt.

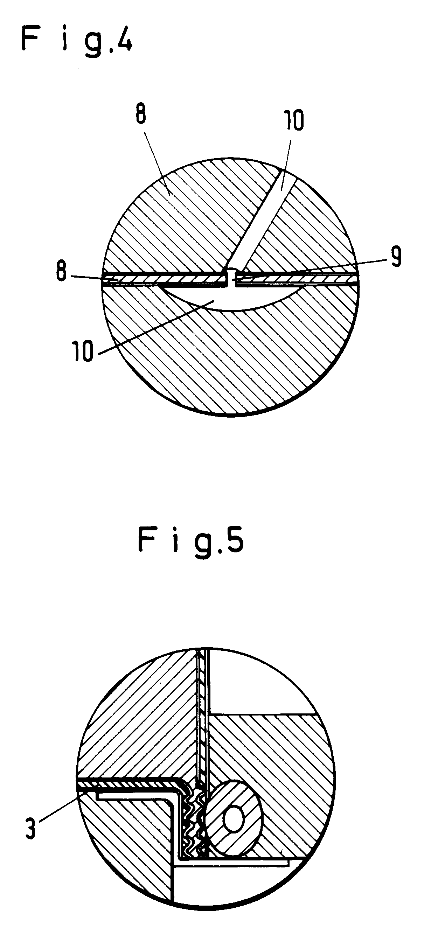

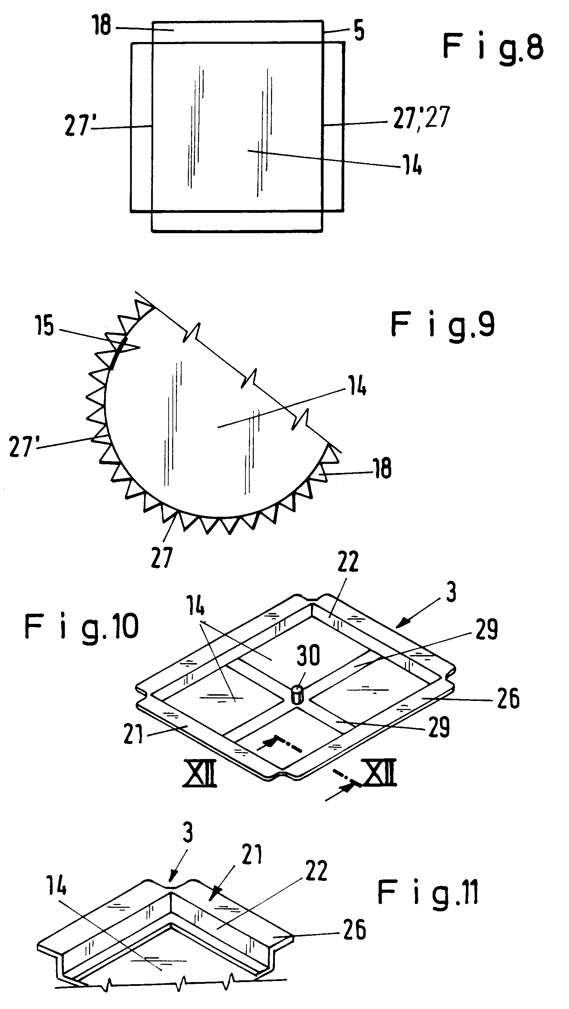

Während man in den Figuren 1 bis 3 den Boden nicht gut erkennen kann, ist dieser in verschiedenen Ausführungsformen in Draufsicht, perspektivisch und abgebrochen im Schnitt in den Figuren 5 und 7 bis 13 deutlicher veranschaulicht. Bei der fertigen Packung weist der allgemein mit 3 bezeichnete Boden eine ebene Hauptfläche 14 aus mit Kunststoff 12 und der Aluminiumfolie 13 beschichtetem Papier 11 auf, die in Figur 8 quadratisch innerhalb der vier inneren Ecken angeordnet ist, in Figur 9 rund ist und bei den Ausführungsformen der Figuren 10 und 11 rechteckig ist. Bei den Ausführungsformen der Figuren 1 bis 3 könnte man sich die rechts vorn dargestellte Grenzlinie als die Teilkante 15 denken (die bei einer runden Ausführungsform nach Figur 9 beispielsweise der links oben gezeigte dicker dargestellte Bereich sein könnte), längs der im Verlaufe des Herstellungsprozesses, wenn der Tubus 1 mit Deckel 2 fertiggestellt wird, der Boden 3 noch derart herausstehend angeordnet ist, daß die Packung bodenseitig offen ist und daher die Füllung vom Boden her erfolgen kann. Erst danach wird der Boden 3 heruntergeklappt, so daß die Hauptfläche 14 des Bodens 3 die gesamte Querschnittsfläche des Tubus 1 einnimmt, die bis auf die Ausführungsform der Figur 9 bei den anderen hier gezeigten Ausführungsformen quadratisch oder rechteckig ist. Wie bei den bekannten Konservendosen liegt die ebene Hauptfläche 14 des Bodens 3 von der äußeren Stirnkante oder der Standfläche um einen Abstand nach innen hin versetzt. Diese Lage sieht man aus den Figuren 12 und 13, wo der Abstand in Figur 13 von der Außenschnittkante 16 des Tubus 1 mit A bezeichnet ist. Den Bereich unterhalb der Außenschnittkante 16 des Tubus über die Höhe A wird hier Endrand 17 des Tubus 1 genannt.

Der Boden 3 aller hier gezeigten Ausführungsformen wird so vorgefertigt, daß die Hauptfläche 14 aus mit der metallenen Zwischenlage 13 versehenen und mit Kunststoff beschichtetem Papier 11, welches die gesamte Querschnittsfläche des Tubus 1 einnimmt, ausgeschnitten wird, beispielsweise als Quadrat mit Verbindungslaschen 18. Jede Außenkante ist nach dem Stanzvorgang ohne Kunststoffbeschichtung und daher für etwa eindringende Flüssigkeit empfindlich. Bei der Ausführungsform nach Figur 10 wird nun auf die Randoberfläche 20 ein im Querschnitt wenigstens L-förmiger Kunststoffrand 21 aufgeschweißt, der aus verschiedenen Teilabschnitten besteht, wie am besten anhand der Schnittdarstellungen der Figuren 12 und 13 erläutert wird.

Die Figuren 12 und 13 zeigen oberhalb der Randoberfläche 20 des Bodens 3 den einen Schenkel des Kunststoffrandes 21, von dem quer aus der Hauptfläche 14 herausstehend der zweite Schenkel 22 angefordert ist, so daß sich für den Kunststoffrand 21 im Querschnitt L-Form ergibt. Der am Endrand 17 des Tubus 1 angebrachte Teil 22 des Kunststoffrandes 21 ist zur Überdeckung der Außenschnittkante 16 des Tubus 1 nach außen mit einer Standfläche 24 verlängert. Diesen Teil 24 des Kunststoffrandes 21 kann man weiterhin verlängern, so daß sich damit später ein Außenschutzfeld 25 bilden läßt. Diese beiden an der fertigen Verpackung im Bodenbereich zu erkennenden Teile (Standfläche 24 und Außenschutzfeld 25) bilden zusammen eine Zunge 26, die in den Figuren 10 bis 12 gezeigt ist.

Eine andere Ausführungsform des Bodens 3 ist in den Figuren 8 und 9 dargestellt. Hier nimmt zwar wieder die ebene Hauptfläche 14 des Bodens 3 die gesamte Querschnittsfläche des Tubus 1 ein, an ihrer Außenkante 27 sind aber Faltlinien 27 gebildet, über welche viele dreieckförmige Verbindungslaschen 18 angelenkt sind. Aus der Darstellung der Figur 13 erkennt man, daß diese Verbindungslaschen 18 aus der Ebene der Hauptfläche 14 neben der Randoberfläche 20 des Bodens 3 senkrecht hohstehend (um die Höhe A) herausgefaltet sind. Dies ist auch aus Figur 12 mit den länglichen Verbindungslaschen 18 zu erkennen. Bei der Anbringung des Bodens 3 gemäß Figur 12 am Endrand 17 des Tubus 1 werden die Verbindungslaschen 18 durch Schweißen so mit dem Kunststoffrand 21 verbunden, daß die Aluminiumzwischenlage 13 mit ihrer Kunststoffummantelung der Lasche 18 - einerseits mit der Zwischenlage 13 der Verbindungslasche 18 mit ihrer Kunststoffbeschichtung - am Endrand 17 des Tubus 1 andererseits verschmolzen wird.

Aus Figur 13 erkennt man schließlich, daß der Kunststoffrand 21 mit seiner Standfläche 24 hier U-förmig nicht nur die Außenschnittkante 16 des Bodens 3 sondern auch die Außenschnittkante 28 des Bodens 3 abdeckt.

In Figur 10 sieht man ferner, daß der Kunststoffrand 21 neben der Randoberfläche 20 des Bodens 3 mit durch Spritzgießen angeformten Verstärkungsstegen 29 verbunden ist, die hier kreuzförmig dargestellt sind. In der Mitte des Kreuzes sieht man noch einen kleinen Nippel 30, welcher die Kunststoffzufuhr bei der Herstellung des Bodens darstellt. Der Kunststoffrand 21 läßt sich nämlich besonders gut und vollständig ausgebildet immer dann herstellen, wenn die Kunststoffzufuhr zentral aus der Mitte erfolgt und die Wege überall nach außen gleich sind, wobei die Verstärkungsstege 29 diese Fließwege während der Herstellung darstellen.

## Patentansprüche

1. Packung für Flüssigkeiten, wie Milch, Saft oder dergleichen, mit über eine Längssiegelnaht (4) zu einem Tubus (1) verbundenen Seitenwänden (5), einem im wesentlichen ebenen Boden (3) und einem, eine Ausgießöffnung (6) aufweisenden Deckel (2), wobei mindestens der Tubus (1) aus mit Kunststoff (12) beschichtetem Papier (11), Karton oder dergleichen als Trägermaterial besteht und der Boden (3) längs mindestens einer Teilkante (15) mittels eines im Querschnitt mindestens im wesentlichen L-förmigem Kunststoffrandes (21) als Verbindungsstück am Tubus (1) so angebracht ist, daß seine ebene Hauptfläche (14) im Abstand (A) von der Außenschnittkante (16) (äußere Stirnkante) des Tubus (1) angeordnet ist, wobei die Hauptfläche (14) des Bodens (3) aus mit Kunststoff (12) beschichtetem Papier besteht, dadurch gekennzeichnet, daß der Boden (3) einen Aufbau mit einer metallenen Zwischenlage (13) hat und innerhalb der Außenschnittkante (16) des Tubus (1) angeordnet ist, daß an der Außenkante (27) der Hauptfläche (14) des Bodens (3) über Faltlinien (27') Verbindungslaschen (18) angelenkt sind, die aus der Ebene der Hauptfläche (14) neben der Randoberfläche (20) des Bodens (3) quer herausgefaltet und am Endrand (17) des Tubus (1) innen angeschweißt sind, und daß der mindestens im wesentlichen L-förmige Kunststoffrand (21) an der Randoberfläche (20) des Bodens (3) und an der Außenschnittkante (16) des Tubus (1) sowie an der Außenschnittkante (28) des Bodens (3) angeschweißt ist.

2. Packung nach Anspruch 1, dadurch gekennzeichnet, daß der Kunststoffrand (21), die Verbindungslaschen (18) des Bodens (3) und den Endrand (17) des Tubus (1) oberflächenseitig und im Querschnitt U-förmig umgreifend, mit einer Standfläche (24) und einem Außenschutzfeld (25) versehen ist.

3. Packung nach einem der Ansprüche 1 oder 2, dadurch gekennzeichnet, daß der Kunststoffrand (21) mit auf dem Boden (3) außen angeschweißten Verstärkungsstegen (29) verbunden ist.

4. Packung nach einem der Ansprüche 1 bis 3, dadurch gekennzeichnet, daß die ebene Hauptfläche (14) des Bodens (3) viereckig ist und vier längliche Verbindungslaschen (18) aufweist.

5. Packung nach einem der Ansprüche 1 bis 4, dadurch gekennzeichnet, daß die ebene Hauptfläche (14) des Bodens (3) einen runden Umfang hat und eine Vielzahl kleiner, vorzugsweise dreieckförmiger, Verbindungslaschen (18) aufweist.

6. Verfahren zur Herstellung einer Packung für Flüssigkeiten, wie Milch, Saft oder dergleichen, mit über eine Längssiegelnaht (4) zu einem Tubus (1) verbundenen Seitenwänden (5), an deren einem (oberen) Ende ein Deckel (2) mit Ausgießöffnung (6) wenigstens teilweise durch Anspritzen und am gegenüberliegenden (unteren) Ende ein Boden (3) zur Bildung eines Scharniers längs einer Außenteilkante (15) angebracht werden, dann die Packung am geöffneten Boden (3) vorbei gefüllt und danach der Boden (3) zum Verschließen des Tubus (1) heruntergefaltet und längs dem restlichen Teil der Außenkante (27) verschweißt wird, dadurch gekennzeichnet, daß der Boden (3) so vorgefertigt wird, daß eine die gesamte Querschnittsfläche des Tubus (1) einnehmende Hauptfläche (14) aus mit einer metallenen Zwischenlage (13) versehenem und mit Kunststoff (12) beschichtetem Papier (11) oder dergleichen ausgeschnitten und längs ihrer Randoberfläche (20) mit einem mindestens im wesentlichen L-förmigen Kunststoffrand (21) verbunden wird, und daß dieser vorgefertigte Boden (3) auf Lager genommen oder beim Erstellen des Kunststoffrandes (21) an der Teilendkante (15) des Tubus (1) angeschweißt oder angespritzt wird, wobei zum Vorfertigen des Bodens (3) die Hauptfläche (14) mit angelenkten Verbindungslaschen (18) ausgestanzt wird, die Laschen (18) hochgefaltet werden und der Kunststoffrand (21) mit wenigstens L-förmigem Querschnitt an die Randoberfläche (20) des Bodens (3) und an die Verbindungslaschen (18) angespritzt wird.

7. Verfahren nach Anspruch 6, dadurch gekennzeichnet, daß der Kunststoffrand (21) an die Verbindungslaschen (18) mit einer überstehenden Zunge (26) zur späteren Bildung einer Standfläche (24) und gegebenenfalls eines Außenschutzfeldes (25) für die Packung angespritzt wird.

8. Verfahren nach Anspruch 6 oder 7, dadurch gekennzeichnet, daß zum Anbringen des vorzugsweise durch ein getrenntes Spritzwerkzeug vorgefertigten Bodens (3) an einer Teilendkante (entsprechend 15) des Tubus (1) zunächst wenigstens eine Verbindungslasche (18) am Endrand (17) des Tubus (1) innen durch Induktionsschweißung befestigt wird und danach die überstehende Zunge (26) des Kunststoffrandes (21) U-förmig um die Verbindungslasche (18) des Bodens (3) und den Endrand (17) des Tubus (1) umgelegt und von außen festgeschweißt wird (UHV oder Wärmebacken).

## Claims

1. A pack for liquids such as milk, juice, or the like, having side walls (5) joined by way of a longitudinal sealing seam (4) to form a tube (1), having a substantially flat bottom (3) and a top (2) which has a pouring opening (6), wherein at least the tube (1) is made of paper (11), card, or the like, in the form of a carrier material which is coated with plastics material (12), and the bottom (3) is arranged on the tube (1) along at least part of the edge (15) by way of a plastics edge (21), forming a connection piece, which is at least substantially L-shaped in cross-section, in such a way that its flat main surface (14) is arranged at a spacing (A) from the outer cut edge (16) (outer front edge) of the tube (1), wherein the main surface (14) of the bottom (3) is made of paper coated with plastics material, characterised in that the bottom (3) is designed with a metal intermediate layer (13) and is arranged inside the outer cut edge (16) of the tube (1), that connecting flaps (18) are hinged by way of fold lines (27') to the outer edge (27) of the main surface (14) of the bottom (3), the connecting flaps being folded transversely out of the plane of the main surface (14) next to the peripheral surface (20) of the bottom (3) and being welded on the inside to the end edge (17) of the tube (1), and that the at least substantially L-shaped plastics edge (21) is welded to the peripheral surface (20) of the bottom (3) and to the outer cut edge (16) of the tube (1) and to the outer cut edge (28) of the bottom (3).

2. A pack according to Claim 1, characterised in that the plastics edge (21) which engages over the top side of the connecting flaps (18) of the bottom (3) and over the end edge (17) of the tube (1) and which encompasses a U-shaped cross-section is provided with a base (24) and an outer protection zone (25).

3. A pack according to one of Claims 1 or 2, characterised in that the plastics edge (21) is joined to reinforcing webs (29) which are welded on the outside of the bottom (3).

4. A pack according to one of Claims 1 to 3, characterised in that the flat main surface (14) of the bottom (3) is quadrangular and has four elongate connecting flaps (18).

5. A pack according to one of Claims 1 to 4, characterised in that the flat main surface (14) of the bottom (3) has a circular periphery and has a plurality of small, preferably triangular, connecting flaps (18).

6. A method for the manufacture of a pack for liquids such as milk, juice, or the like, having side walls (5) which are joined by way of a longitudinal sealing seam (4) to form a tube (1), and arranged at the one (upper) end of the tube, at least partly by injection moulding, is a top (2) with a pouring opening (6) and at the opposite (bottom) end is a bottom (3) to form a hinge along an outer part of the edge (15), and the pack is filled through the open bottom (3) and then the bottom (3) is folded down to close the tube (1) and is welded along the rest of the outer edge (27), characterised in that the bottom (3) is prefabricated in such a way that a main surface (14) which takes in the entire cross-sectional surface area of the tube (1) is cut out from paper (11), or the like, provided with an intermediate metal layer (13) and coated with plastics material (12), and is joined along its peripheral surface (20) to a plastics edge (21) which is at least substantially L-shaped, and that this prefabricated bottom (3) is welded or injected to part of the end edge (15) of the tube (1) when in store or when the plastics edge (21) is made, wherein, to prefabricate the bottom (3) the main surface (14) is stamped out with hinged connecting flaps (18), the flaps (18) are folded up, and the plastics edge (21) of at least L-shaped cross-section is injected onto the upper edge surface (20) of the bottom (3) and onto the connecting flaps (18).

7. A method according to Claim 6, characterised in that the plastics edge (21) is injected onto the connecting flaps (18) with an overhanging tongue portion (26) which will subsequently form a base (24) and possibly an outer protection zone (25) for the pack.

8. A method according to Claim 6 or Claim 7, characterised in that to arrange the bottom (3), preferably prefabricated using a separate injection tool, onto part of the end edge (corresponding to 15) of the tube (1) at least one connecting flap (18) is fixed first of all to the end edge (17) of the tube (1) on the inside by induction welding, and the overhanging tongue portion (26) of the plastics edge (21) is folded over in a U-shape over the connecting flap (18) of the bottom (3) and the end edge (17) of the tube (1), and is firmly welded from the outside (UHV or heating jaws).

## Revendications

1. Emballage pour liquides, tels que du lait, des jus ou analogue, comprenant des parois latérales (5) reliées en un tube (1) par l'intermédiaire d'un joint de scellement longitudinal (4), un fond (3) sensiblement plat, et un couvercle (2) présentant une ouverture de déversement (6), au moins le tube (1) étant réalisé en papier (11), carton ou matériau similaire revêtus de matière synthétique (12), en guise de matériau de support, et le fond (3) étant ainsi adjoint au tube (1) le long d'au moins d'une arête partielle (15), au moyen d'un bord de matière synthétique (21) présentant en section transversale une forme au moins sensiblement en "L", comme pièce de liaison, que sa surface principale (14) plane est agencée à distance (A) de l'arête de coupe extérieure (16) (arête frontale extérieure) du tube (1), la surface principale (14) du fond (3) étant réalisée en papier revêtu de matière synthétique (12), caractérisé en ce que le fond (3) a une structure à couche intermédiaire métallique (13), et est agencé à l'intérieur de l'arête de coupe extérieure (16) du tube (1), en ce qu'à l'arête extérieure (27) de la surface principale (14) du fond (3), sont articulées, par l'intermédiaire de lignes de pliage (27'), des languettes de liaison (18), qui sont dépliées transversalement hors du plan de la surface principale (14), à côté de la surface extérieure de bord (20) du fond (3), et qui sont soudées, à l'intérieur, au bord d'extrémité (17) du tube (1), et en ce que le bord en matière synthétique (21), au moins sensiblement en forme de "L", est soudé à la surface extérieure de bord (20) du fond (3) et à l'arête de coupe extérieure (16) du tube (1), ainsi qu'à l'arête de coupe extérieure (28) du fond (3).

2. Emballage selon la revendication 1, caractérisé en ce que le bord de matière synthétique (21) enserrant les languettes de liaison (18) du fond (3) et le bord d'extrémité (17) du tube (1) sur leur surface et en forme de "U" en section transversale, est pourvu d'une surface d'appui (24) et d'une zone de protection extérieure (25).

3. Emballage selon l'une des revendications 1 ou 2, caractérisé en ce que le bord de matière synthétique (21) est relié avec des nervures de renfort (29) soudées extérieurement sur le fond (3).

4. Emballage selon l'une des revendications 1 à 3, caractérisé en ce que la surface principale plane (14) du fond (3) est de forme carrée et présente quatre languettes de liaison (18) de forme allongée.

5. Emballage selon l'une des revendications 1 à 4, caractérisé en ce que la surface principale plane (14) du fond (3) a une périphérie de forme ronde, et présente un grand nombre de petites languettes de liaison (18), de préférence de forme triangulaire.

6. Procédé pour la réalisation d'un emballage pour liquides, tels que du lait, des jus ou analogue, comprenant, reliées en un tube (1) par l'intermédiaire d'un joint de scellement longitudinal (4), des parois latérales (5), à l'une des extrémités (supérieure) desquelles est adjoint, au moins partiellement par moulage par injection, un couvercle (2) comportant une ouverture de déversement (6), et à l'extrémité opposée (inférieure), un fond (3) pour former une charnière le long d'une arête partielle extérieure (15), l'emballage étant ensuite rempli par passage au fond (3) ouvert, et le fond (3) étant ensuite rabattu et soudé le long de la partie restante de l'arête extérieure (27), pour l'obturation du tube (1), caractérisé en ce que le fond (3) est préfabriqué de manière à ce qu'une surface principale (14) occupant la totalité de la surface de section transversale du tube (1), est découpée à partir de papier (11) ou analogue, pourvu d'une couche intermédiaire métallique (13) et revêtu de matière synthétique (12), et est relié, le long de sa surface de bord (20), avec un bord de matière synthétique (21) au moins sensiblement en forme de "L", et en ce que ce fond (3) préfabriqué, pris en magasin, ou lors de l'établissement du bord de matière synthétique (21), est soudé ou moulé par injection à l'arête partielle (15) du tube (1), la préfabrication du fond (3) s'effectuant par découpage à la matrice de la surface principale (14), avec des languettes de liaison (18) qui y sont articulées, pliage vers le haut des languettes (18), et moulage par injection du bord de matière synthétique (21) à section transversale au moins sensiblement en forme de "L", à la surface de bord (20) du fond (3) et aux languettes de liaison (18).

7. Procédé selon la revendication 6, caractérisé en ce que le bord en matière synthétique (21) est moulé par injection aux languettes de liaison (18), de manière à laisser subsister une languette (26) faisant saillie, pour former ultérieurement une surface d'appui (24), et, le cas échéant, une zone de protection extérieure (25) pour l'emballage.

8. Procédé selon la revendication 6 ou 7, caractérisé en ce que pour l'adjonction du fond (3) fabriqué à l'avance, de préférence à l'aide d'un outil d'injection distinct, à une arête partielle (correspondant à 15) du tube (1), l'on réalise tout d'abord la fixation d'au moins une languette de liaison (18) au bord d'extrémité (17), à l'intérieur du tube (1), par soudage par induction, et ensuite, la languette (26) faisant saillie, du bord de matière synthétique (21), est rabattue en forme de "U" autour de la languette de liaison (18) du fond (3) et du bord d'extrémité (17) du tube (1), et est fixée par soudage de l'extérieur (sous ultravide ou par des mors chauffants).
